# EUROPEAN PATENT APPLICATION

(11) **EP 1 175 046 A2**
(43) Date of publication of application: **23.01.2002**
(21) Application number: 01107437.4
(22) Date of filing: 27.03.2001
(51) Int. Cl.: H04L 12/56, H04Q 11/04

(54) **Buffer unit and switching apparatus**

(30) Priority: 18.07.2000 JP 2000217604
(71) Applicant: FUJITSU LIMITED, Kawasaki-shi, Kanagawa 211-8588 (JP)
(72) Inventor: Matsuoka, Naoki, c/o Fujitsu Limited, Kawasaki-shi, Kanagawa 211-8588 (JP); Tomonaga, Hiroshi, c/o Fujitsu Limited, Kawasaki-shi, Kanagawa 211-8588 (JP); Kawarai, Kenichi, c/o Fujitsu Limited, Kawasaki-shi, Kanagawa 211-8588 (JP)
(74) Representative: HOFFMANN - EITLE

(57) **Abstract**

A buffer unit fragments variable-length packets into fixed-length packets for processing in units of fixed-length packets. The buffer unit includes a fixed-length packet storing section for storing the fixed-length packets for each of output paths, a multicasting processor for storing multicasting packets having a plurality of destinations and transferring the multicasting packets to the fixed-length packet storing section depending on the plurality of destinations, and a controller for monitoring a storage state of the fixed-length packet storing section and carrying out a control so that the multicasting packets are transferred within a variable-length packet formed by a plurality of fixed-length packets.

## Description

### BACKGROUND OF THE INVENTION

This application claims the benefit of a Japanese Patent Application No.2000-217604 filed July 18, 2000, in the Japanese Patent Office, the disclosure of which is hereby incorporated by reference.

### 1. Field of the Invention

The present invention generally relates to buffer units and switching apparatuses, and more particularly to a buffer unit which processes variable-length packets and to a switching apparatus which carries out routing of variable-length packets.

### 2. Description of the Related Art

Recently, popular use of the Internet is rapidly spreading, thereby rapidly increasing communication traffic demands. In the Internet backbone, there are demands to efficiently accommodate a large amount of Internet Protocol (IP) traffic, and demands for switching apparatuses having a large capacity are increasing.

In order to realize a switching apparatus having a large capacity, it is essential to carry out the processing at a high speed. But in the case of the IP packets, it is necessary to carry out switching and buffering at high speeds in units of the variable-length packets, which is difficult to achieve given the performances of existing devices. For this reason, in order to realize the high-speed switching, it is known to fragment the variable-length packets into fixed-length packets and to carry out the process in units of the fixed-length packets. The fragmented fixed-length packets are defragmented back into the original variable-length packets before being output from the switching apparatus.

In the switching apparatus which fragments the variable-length packets into the fixed-length packets and carries out the process in units of the fixed-length packets, the multicasting variable-length packets to be transferred to a plurality of destinations are stored in a buffer unit, and the multicasting is realized by duplicating the stored variable-length packets.

In this case, a delay is inevitably generated to produce identical duplicates of the variable-length packets. Hence, in order to avoid the unicasting variable-length packets to be transferred to a single specified destination from being affected by the delay, the switching apparatus is independently provided with a queue for the multicasting and a queue for the unicasting.

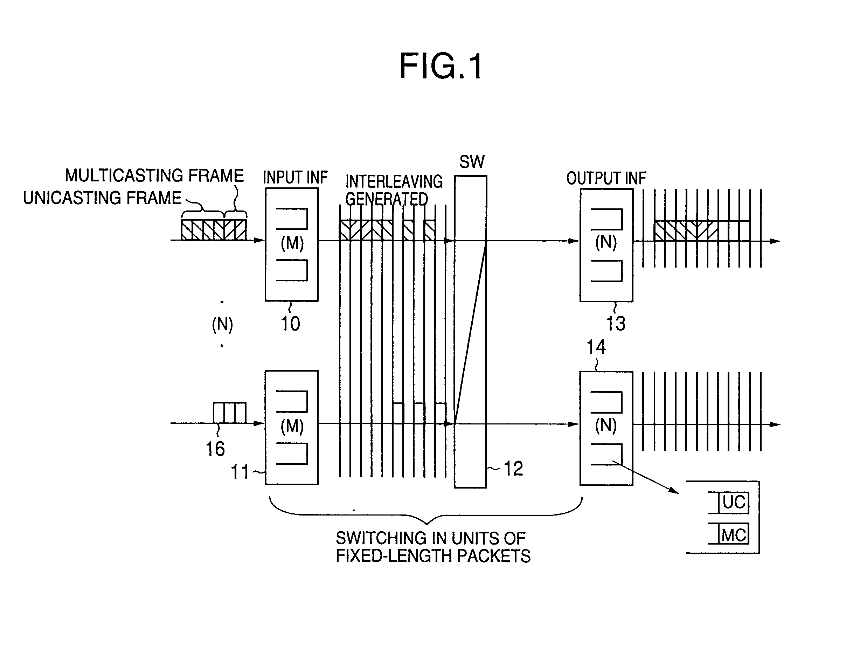

FIG. 1 is a diagram showing a structure of an example of a switching apparatus. In the following description, a variable-length packet will be referred to as a "frame", in order to clearly distinguish the variable-length packet from a fixed-length packet.

In a switching apparatus 1 shown in FIG. 1, fixed-length packets obtained by fragmenting frames are supplied to input buffer sections 10 and 11, in order to carry out a process in units of fixed-length packets. For example, when fragmented multicasting packets and unicasting packets are supplied to the input buffer section 10, multicasting packets including a delay generated by duplication may be interleaved between the unicasting packets which form a unicasting frame.

In other words, frame continuity is not guaranteed at the output of the input buffer section 10 connected to a switch 12 which carries out a switching process depending on packet destinations. For this reason, in order to restore the original frames, output buffer sections 13 and 14 of the switching apparatus 1, which receive outputs from the input buffer sections 10 and 11, require a unicasting frame assembling queue and a multicasting frame assembling queue for carrying out a defragmenting process.

Generally, in the switching apparatus 1 which carries out the switching in units of the fixed-length packets, a frame assembling queue is required for each output path. Consequently, in a large-scale switching apparatus, there was a problem in that the amount of hardware becomes considerably large if the frame assembling queues are set up independently for the multicasting frames and the unicasting frames.

### SUMMARY OF THE INVENTION

Accordingly, it is a general object of the present invention to provide a novel and useful buffer unit and switching apparatus, in which the problem described above is eliminated.

Another and more specific object of the present invention is to provide buffer unit and a switching apparatus, which can avoid frame interleaving and minimize the required amount of hardware.

Still another object of the present invention is to provide a buffer unit for fragmenting variable-length packets into fixed-length packets for processing in units of fixed-length packets, comprising fixed-length packet storing means for storing the fixed-length packets for each of output paths, multicasting processing means for storing multicasting packets having a plurality of destinations, and transferring the multicasting packets to the fixed-length packet storing means depending on the plurality of destinations, and control means for monitoring a storage state of the fixed-length packet storing means, and carrying out a control so that the multicasting packets are transferred within a variable-length packet formed by a plurality of fixed-length packets. According to the buffer unit of the present invention, it is possible to avoid the frame interleaving from being generated by appropriately controlling the timing of the multicasting processing means.

A further object of the present invention is to provide a buffer unit for fragmenting variable-length packets into fixed-length packets for processing in units of fixed-length packets, comprising fixed-length packet storing means, including first and second packet storing sections, for storing the fixed-length packets for each of output paths, multicasting processing means for storing multicasting packets having a plurality of destinations, and transferring the multicasting packets to the second packet storing section depending on the plurality of destinations, and control means for monitoring a storage state of one of the first and second packet storing sections, and carrying out a control so that reading from the first and second packet storing sections is switched in units of a variable-length packet which is formed by a plurality of fixed-length packets. According to the buffer unit of the present invention, it is possible to avoid the frame interleaving from being generated by appropriately switching the reading from the first and second packet storing sections.

Another object of the present invention is to provide a buffer unit for fragmenting variable-length packets into fixed-length packets for processing in units of fixed-length packets, comprising temporary storing means for storing the fixed-length packets and outputting a plurality of fixed-length packets forming a single variable-length packet after the plurality of fixed-length packets are received, fixed-length packet storing means for storing the plurality of fixed-length packets output from the temporary storing means for each of output paths, and multicasting processing means for storing multicasting packets having a plurality of destinations, and transferring the multicasting packets to the fixed-length packet storing means depending on the plurality of destinations. According to the buffer unit of the present invention, it is possible to avoid the frame interleaving from being generated by appropriately controlling the storage to the temporary storing means and the fixed-length packet storing means.

Still another object of the present invention is to provide a buffer unit for fragmenting variable-length packets into fixed-length packets for processing in units of fixed-length packets, comprising packet storing means for storing the fixed length packets, fixed-length packet storing means for storing stored addresses of the fixed-length packets for each of output paths, multicasting processing means for storing stored addresses of multicasting packets having a plurality of destinations, and transferring virtual addresses corresponding to the stored addresses of the multicasting packets to the fixed-length packet storing means depending on the plurality of destinations, and queue length managing means for managing a first sum total of a number of addresses and a number of virtual addresses stored in the fixed-length packet storing means for each of the output paths, and a second sum total of the number of addresses and a number of the addresses of the multicasting packets, where the first sum total is used for packet cancel control, the second sum total is used for packet contention control. According to the buffer unit of the present invention, it is possible to efficiently utilize the buffer capacity and carry out accurate packet cancel control and packet contention control.

A further object of the present invention is to provide a buffer unit for fragmenting variable-length packets into fixed-length packets for processing in units of fixed-length packets, comprising first storing means for storing the fixed-length packets, and outputting a plurality of fixed-length packets forming a single variable-length packet when the plurality of fixed-length packets are received, second storing means for storing the plurality of fixed-length packets output from the first storing means for each of output paths, multicasting processing means for storing multicasting packets having a plurality of destinations, and transferring the multicasting packets to the second storing section depending on the plurality of destinations, where outputs of the first storing means and the multicasting processing means are switched in units of a variable-length packet which is formed by a plurality of fixed-length packets. According to the buffer unit of the present invention, it is possible to avoid the frame interleaving from being generated.

Another object of the present invention is to provide a switching apparatus for fragmenting variable-length packets into fixed-length packets for processing in units of fixed-length packets, comprising an input buffer section receiving multicasting packets having a plurality of destinations or unicasting packets having a single destination, a switching section switching the multicasting packets or the unicasting packets received from the input buffer section depending on the destination of each packet, and an output buffer section receiving fixed-length packets from the switching section depending on output paths, and defragmenting the fixed-length packets into the variable-length packets, wherein the input buffer section outputs a plurality of fixed-length packets in units of a variable-length packet which is formed by a plurality of fixed-length packets. According to the switching apparatus of the present invention, it is possible to avoid the frame interleaving from being generated.

Other objects and further features of the present invention will be apparent from the following detailed description when read in conjunction with the accompanying drawings.

### BRIEF DESCRIPTION OF THE DRAWINGS

FIG. 1 is a diagram showing a structure of an example of a switching apparatus;
FIG. 2 is a diagram showing a structure of a first embodiment of a buffer unit of the present invention;
FIG. 3 is a diagram for explaining a multicasting packet duplicating process;
FIG. 4 is a diagram for explaining a relationship of a read judging process and an address duplicating process;
FIG. 5 is a diagram for explaining a relationship of the read judging process and the address duplicating process;
FIG. 6 is a diagram for explaining a relationship of the read judging process and the address duplicating process;
FIG. 7 is a diagram showing a structure of a second embodiment of the buffer unit according to the present invention;
FIG. 8 is a diagram for explaining a multicasting packet duplicating process;
FIG. 9 is a diagram for explaining a read judging process in units of frames;
FIG. 10 is a diagram showing a structure of a third embodiment of the buffer unit according to the present invention;
FIG. 11 is a diagram for explaining a multicasting packet duplicating process;
FIG. 12 is a diagram for explaining a transfer process from a frame queue;
FIG. 13 is a diagram showing a structure of a fourth embodiment of the buffer unit according to the present invention;
FIG. 14 is a diagram for explaining a cancel control process of a frame queue;
FIG. 15 is a diagram showing a structure of a fifth embodiment of the buffer unit according to the present invention; and
FIG. 16 is a diagram for explaining a queue length managing process.

### DESCRIPTION OF THE PREFERRED EMBODIMENTS

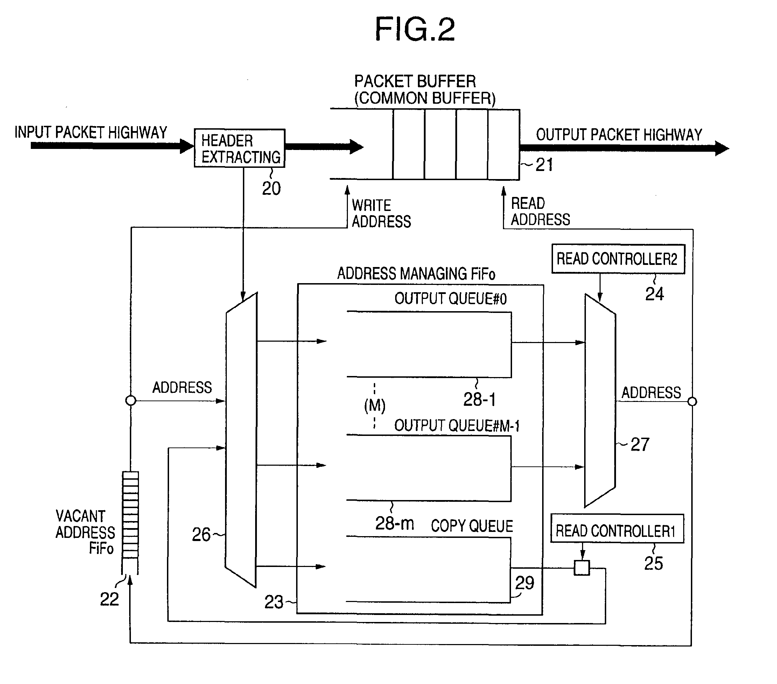

A description will be given of various embodiments of the present invention, by referring to FIG. 2 and subsequent drawings.

FIG. 2 is a diagram showing a structure of a first embodiment of a buffer unit according to the present invention. The structure shown in FIG. 2 corresponds to the structure of the input buffer sections 10 and 11 shown in FIG. 1. Hence, a first embodiment of a switching apparatus according to the present invention employs the first embodiment of the buffer unit. The buffer unit shown in FIG. 2 includes a head extracting section 20, a packet buffer section 21, a vacant address buffer section 22, an address managing buffer section 23, read controllers 24 and 25, and selectors 26 and 27. The address managing buffer section 23 includes m output queues 28-1 through 28-m provided in correspondence with m output paths, and a copy queue 29 for duplicating a multicasting frame and supplying the duplicate to a predetermined output queue.

The header extracting section 20 extracts destination information from a packet header of an arriving fixed-length packet (hereinafter simply referred to as a packet). The vacant address buffer section 22 manages vacant addresses of the packet buffer section 21, and supplies a write address for storing the arriving packet to the packet buffer section 21 and the selector 26. The packet buffer section 21 stores the packet depending on the supplied write address. The selector 26 selects one of the output queues 28-1 through 28-m and the copy queue 29 depending on the destination information extracted by the header extracting section 20, and supplies thereto the write address supplied from the vacant address buffer section 22.

The read controller 24 manages the read from the output queues 28-1 through 28-m by controlling the selector 27. In addition, the read controller 25 manages the read from the copy queue 29. In this embodiment, interleaving is prevented from occurring in the packets output from the buffer unit by the control of the read controllers 24 and 25. A more detailed description of the process carried out by the buffer unit will be described hereinafter.

For example, the IP frames are fragmented into the packets in fixed-length units, and input to the buffer unit. Each packet has a packet header including destination information, a flag indicating a start or end of the frame, and a flag indicating multicasting or unicasting.

The packets arriving at the buffer unit are supplied to the header extracting section 20, and then supplied from the header extracting section 20 to the packet buffer section 21. The header extracting section reads the destination information, the flag indicating the start or end of the frame, and the flag indicating multicasting or unicasting, from the packet header of the supplied packets.

The vacant address buffer section 22 supplies the vacant addresses of the packet buffer section 21 to the packet buffer section 21 and the selector 26 as the write addresses for storing the arriving packets. The packets are stored in the packet buffer section 21 according to the supplied write addresses.

The selector 26 selects one of the output queues 28-1 through 28-m and the copy queue 29 depending on the destination information, the flag indicating the start or end of the frame, and the flag indicating multicasting or unicasting which are read by and received from the header extracting section 20, and supplies thereto the write address from the vacant address buffer section 22.

For example, in a case where the arriving packets are unicasting packets which are obtained by fragmenting unicasting frames, the write addresses supplied from the vacant address buffer section 22 are stored in the output queues 28-1 through 28-m corresponding to the destination information. On the other hand, in a case where the arriving packets are multicasting packets which are obtained by fragmenting multicasting frames, the write addresses supplied from the vacant address buffer section 22 are temporarily stored in the copy queue 29.

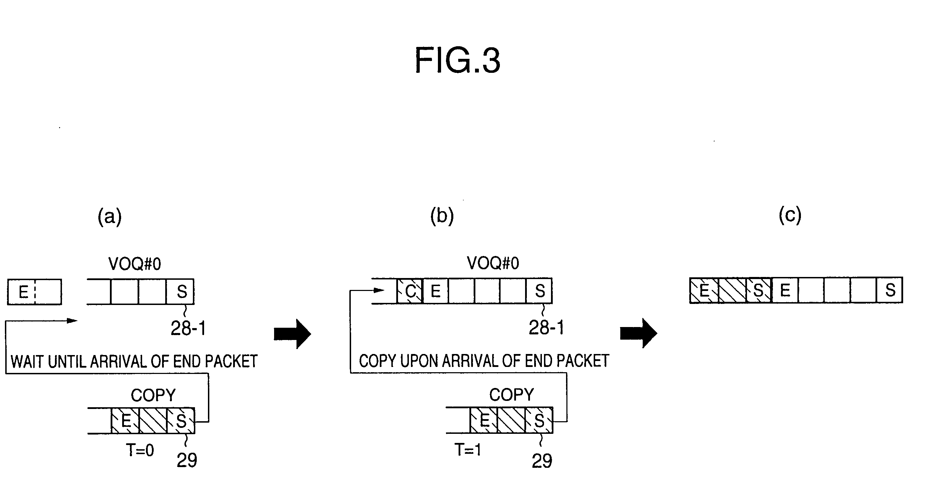

The write addresses stored in the copy queue 29 are duplicated (time-copied) to a predetermined one of the output queues 28-1 through 28-m under control of the read controller 25. A description will now be given of a multicasting packet duplicating process, by referring to FIG. 3. FIG. 3 is a diagram for explaining the multicasting packet duplicating process.

Normally, one frame is made up of a plurality of packets, and it takes time until the packets amounting to one frame are stored in the packet buffer section 21. For example, it is assumed for the sake of convenience that one unicasting frame made up of five multicasting packets arrives at the buffer unit. FIG. 3(a) shows a state where the write addresses of the three unicasting packets which have already arrived are stored in the output queue (VOQ#0) 28-1. In this state, the write addresses of the multicasting packets amounting to one multicasting frame are already stored in the copy queue (COPY) 29.

In a case where the duplicating destination of the copy queue 29 is the output queue 28-1 and the write addresses of the multicasting packets stored in the copy queue 29 were simply duplicated to the output queue 28-1, the multicasting packets forming the multicasting frame would become interleaved to the unicasting packets forming the unicasting frame. In other words, the interleaving of the unicasting frame and the multicasting frame would be generated.

In order to prevent the interleaving, the read controller 25 which controls the read from the copy queue 29 monitors the state of the output queue 28-1 at the duplicating destination. The read controller 25 carries out a control so as not to carry out the duplicating process in a state where the write address of the last unicasting packet forming the unicasting frame is not stored in the output queue 28-1 and the unicasting frame is being transferred or being stored.

In other words, as shown in FIG. 3(b), the duplicating process is not carried out in a state where the write address of the last unicasting packet is not stored in the output queue 28-1, and the duplicating process is carried out after the write address of the last unicasting packet is stored in the output queue 28-1. Accordingly, it is possible to prevent the interleaving of the unicasting frame and the multicasting frame, as may be seen from FIG. 3(c).

When carrying out the duplicating process from the copy queue 29 to the output queues 28-1 through 28-m, new vacant addresses are obtained from the vacant address buffer section 22 with respect to the write addresses of the multicasting packets amounting to one multicasting frame stored in the copy queue 29, and the vacant addresses (hereinafter referred to as provisional addresses) are supplied to one of the output queues 28-1 through 28-m at the duplicating destination. When the provisional addresses are transferred from one of the output queues 28-1 through 28-m at the duplicating destination, a reference is made to the correspondences of the provisional addresses and the actual write addresses of the multicasting packets, so that it is possible to read the multicasting packets from the packet buffer section 21.

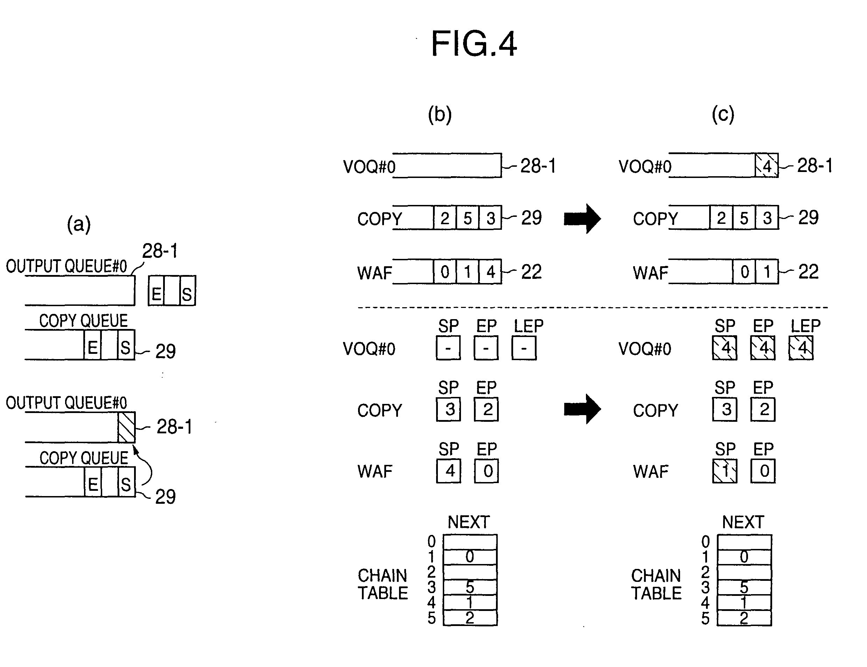

Next, a description will be given of a read judging process and an address duplicating process of the read controller 25, by referring to FIGS. 4 through 6. In this embodiment, a description will be given of the relationship of the read judging process and the address duplicating process with respect to the output queue 28-1, but the relationship is of course the same for the other output queues 28-2 through 28-m.

FIG. 4 is a diagram for explaining the relationship of the read judging process and the address duplicating process for a case where the output queue (VOQ#0) 28-1 is vacant. The same designations will be used in FIG. 4 and the subsequent figures. FIG. 4(a) shows a state where the write addresses of the unicasting packets or multicasting packets amounting to one frame are read from the output queue 28-1 and the output queue 28-1 is vacant. In this state, the output queue 28-1 does not store the write address of the last unicasting packet or the last multicasting packet, and transfer of the write addresses of the unicasting packets or the multicasting packets has been completed, thereby satisfying a read judging condition.

A description will be given of the address duplicating process which duplicates the write addresses of the multicasting packets from the copy queue (COPY) 29 to the output queue 28-1. The output queue 28-1 and the copy queue 29 are controlled using an address chain method. For this reason, this embodiment of the buffer unit is provided with a chain table (CT) which stores a next write address, a start pointer (SP) which indicates a starting write address for each of the output queues 28-1 through 28-m and the copy queue 29, and an end pointer (EP) which indicates an ending write address. Sequences of the write addresses stored in the output queues 28-1 through 28-m are managed by the chain table CT and the pointers SP and EP.

In FIG. 4(b) and 4(c), a portion above a dotted line shows a logical image of the output queue 28-1, the copy queue 29 and the vacant address buffer section (WAF) 22. In addition, in FIG. 4(b) and 4(c), a portion under the dotted line shows operations of the chain table CT and the pointers SP and EP.

For example, in the case shown in FIG. 4(b), write addresses "3", "5" and "2" of the multicasting packets amounting to one frame are stored in the copy queue 29. The starting write address "3" is stored at the start pointer SP of the copy queue 29, and the ending write address "2" is stored at the end pointer EP of the copy queue 29. In addition, vacant addresses "4", "1" and "0" are stored in the vacant address buffer section 22, and the starting vacant address "4" and the ending vacant address "0" are respectively stored at the start pointer SP and the end pointer EP of the vacant address buffer section 22.

When the write addresses of the multicasting packets amounting to one frame are stored in the copy queue 29, the read controller 25 refers to a result of the read judging process with respect to the output queue 28-1 at the duplicating destination. In the case shown in FIG. 4(b), the read judging condition is satisfied, and thus, the vacant address "4" is obtained from the vacant address buffer section 22 as the write address.

In this state, the vacant address "1" which is next to the vacant address "4" is obtained from the chain table CT, as the starting vacant address which is to be newly stored at the start pointer SP of the vacant address buffer section 22. Then, as shown in FIG. 4(c), the vacant address "1" is stored as the new starting vacant address at the start pointer SP of the vacant address buffer section 22. The write address "4" which is obtained from the vacant address buffer section 22 will be referred to as the provisional address.

The provisional address "4" is stored in the output queue 28-1, by storing the provisional address "4" at the start pointer SP and the end pointer EP of the output queue 28-1. In addition, the write address of the latest last packet is stored at a latest end pointer (LEP) of the output queue 28-1, and the provisional address "4" is stored at this latest end pointer LEP. The latest end pointer LEP is updated when storing the write address of the last unicasting packet and when storing the provisional address.

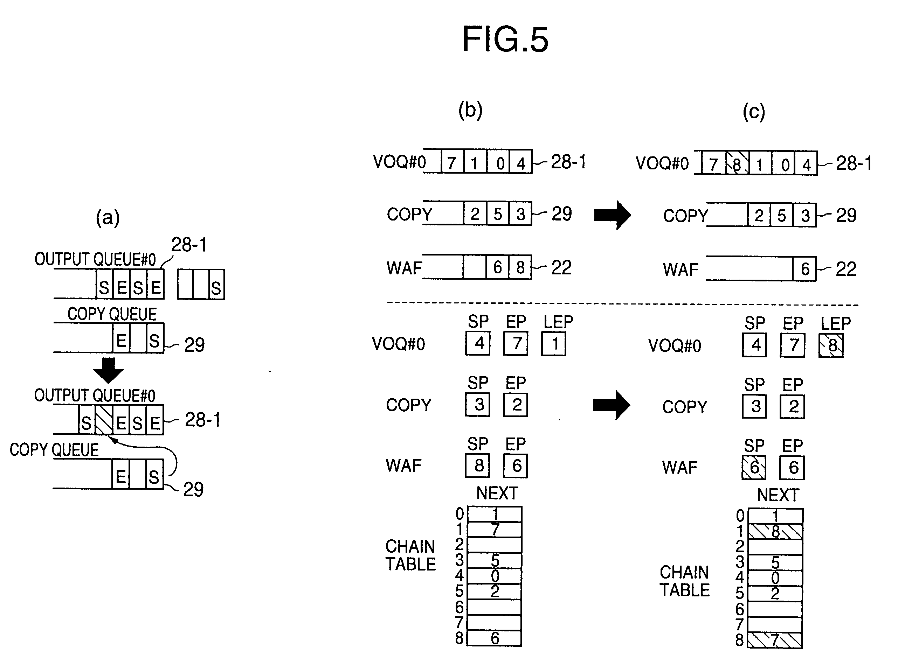

FIG. 5 is a diagram for explaining a relationship of the read judging process and the address duplicating process in a case where the write address of the last packet is stored in the output queue 28-1. FIG. 5(a) shows a state where a write address (E) of the last packet is stored in the output queue 28-1 and the read judging condition is satisfied.

When the write address of the last unicasting packet or the provisional address is stored in the output queue 28-1, a new provisional address is inserted next to the write address of the latest last unicasting packet or the provisional address. The write address of the latest last unicasting packet or the provisional address is stored at the latest end pointer LEP of each of the output queues 28-1 through 28-m.

For example, in the case shown in FIG. 5(b), the write address of the latest last unicasting packet or the provisional address is "1", and the this address "1" is stored at the latest end pointer LEP of the output queue 28-1. Accordingly, the new provisional address must be inserted between the write address "1" and the write address "7" which are store din the output queue 28-1.

First, the vacant address "8" is obtained from the vacant address buffer section 22 as the provisional address, and the vacant address "6" is stored as the new starting vacant address at the start pointer SP of the vacant address buffer section 22. In addition, the write address "7" next to the write address "1" is obtained from the chain table CT.

Then, in of the output queue 28-1, the provisional address "8" is stored as the write address next to the write address "1" which is stored at the latest end pointer LEP, and the write address "7" is stored as the write address next to the write address "8". Since the provisional address is newly stored in the output queue 28-1, the provisional address "8" is stored at the latest end pointer LEP. Hence, the provisional address "8" is inserted between the write address "1" and the write address "7" which are stored in the output queue 28-1, as shown in FIG. 5(c).

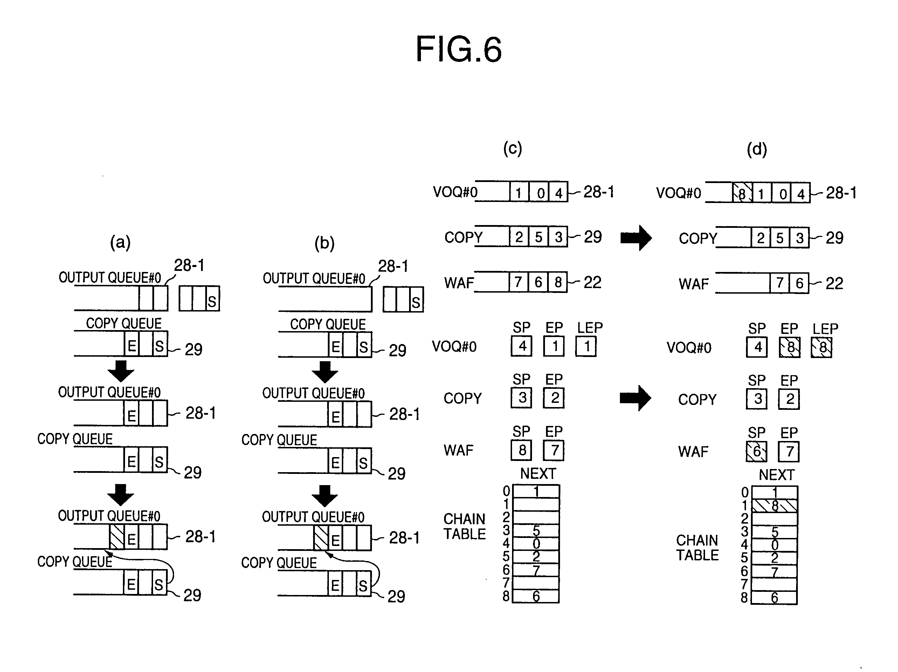

FIG. 6 is a diagram for explaining a relationship of the read judging process and the address duplicating process for a case where the write address of the last packet is not stored in the output queue 28-1.

FIG. 6(a) shows a state where the output queue 28-1 is not vacant, but the read judging condition is not satisfied because the write address (E) of the last packet is not stored therein. FIG. 6(b) shows a state where the output queue 28-1 is vacant, but the read judging condition is not satisfied because the unicasting packets are being read and the last unicasting packet has not arrived.

When the address duplicating process is carried out in the state shown in FIG. 6(a) or 6(b), the interleaving occurs between the unicasting frame and the multicasting frame. For this reason, the address duplicating process is not carried out if the last unicasting packet has not yet arrived, and the address duplicating process is carried out after the last unicasting packet arrives in the case shown in FIG. 6(a) or 6(b).

When the last unicasting packet arrives, the vacant address "8" is obtained from the vacant address buffer section 22 as the provisional address, and the vacant address "6" is stored as the new starting vacant address at the start pointer SP of the vacant address buffer section, as shown in FIG. 6(c). Then, the provisional address "8" is stored as the write address next to the write address "1" stored at the latest end pointer LEP of the output queue 28-1. Hence, since the provisional address is newly stored in the output queue 28-1, the provisional address "8" is stored at the latest end pointer LEP of the output queue 28-1 as shown in FIG. 6(d). In addition, the provisional address "8" is stored at the end pointer EP of the output queue 28-1.

Therefore, in the case shown in FIG. 6(a) or 6(b), the address duplicating process is not carried out when the last unicasting packet has not yet arrived, and the address duplicating process is carried out after the last unicasting packet arrives, so that the interleaving of the unicasting frame and the multicasting frame is prevented from being generated in the output queues 28-1 through 28-m.

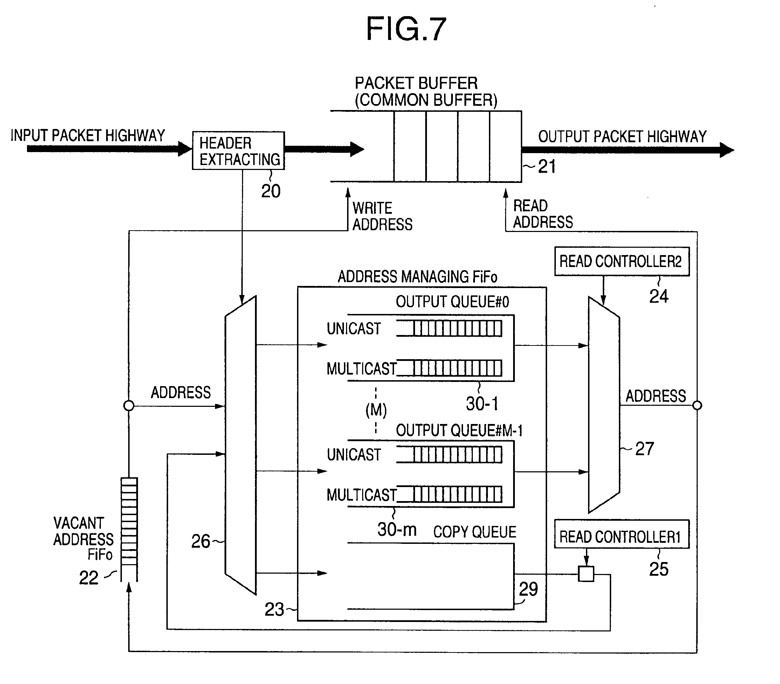

FIG. 7 is a diagram showing a structure of a second embodiment of the buffer unit according to the present invention. In FIG. 7, those parts which are the same as those corresponding parts in FIG. 2 are designated by the same reference numerals, and a description thereof will be omitted.

The buffer unit shown in FIG. 7 differs from the buffer unit shown in FIG. 2 in that the address managing buffer section 23 of the buffer unit shown in FIG. 7 has output queues 30-1 through 30-m provided with internal queues for unicasting and for multicasting. As a result, the read controller 25 which controls the read from the copy queue 29 does not need to monitor the state of each of the output queues 30-1 through 30-m at the duplicating destination. Instead, the read controller 24 which controls the read from the output queues 30-1 through 30-m controls the read from the output queues 30-1 through 30-m in units of frames.

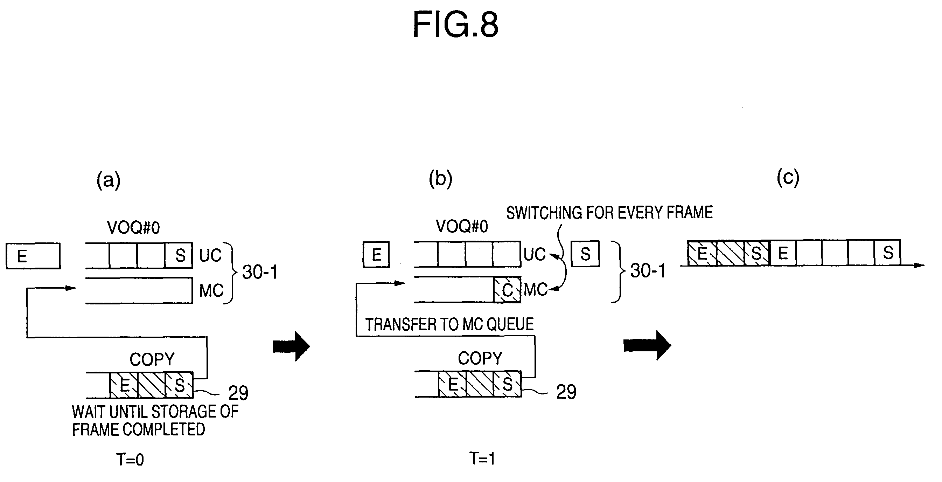

A description will be given of a read judging process of the read controller 24, by referring to FIG. 8. FIG. 8 is a diagram for explaining a multicasting packet duplicating process of this second embodiment of the buffer unit. It is assumed for the sake of convenience that, for example, one unicasting frame formed by five unicasting packets arrives at the buffer unit. FIG. 8(a) shows a state where the write addresses of the three unicasting packets which have already arrived are stored in the unicasting internal queue included in the output queue 30-1. In addition, in this state, the write address of the multicasting packets amounting to one frame are already stored in the copy queue 29.

Since the output queues 30-1 through 30-m respectively include the unicasting internal queue and the multicasting internal queue, even when the duplicating destination of the copy queue 29 is the output queue 30-1, it is possible to duplicate the provisional address of the multicasting packet to the output queue 30-1 without having to wait for the arrival of the last unicasting packet.

In FIG. 8(b), when the write address (S) of the first unicasting packet is supplied from the unicasting internal queue of the output queue 30-1 to the selector 27, the read controller 24 continues to select the unicasting internal queue of the output queue 30-1 until the write address (E) of the last unicasting packet is output. In addition, the read controller 24 selects the multicasting internal queue of the output queue 30-1 after the write address (E) of the last unicasting packet is output. Accordingly, the multicasting frame is output after the unicasting frame is read, as shown in FIG. 8(c).

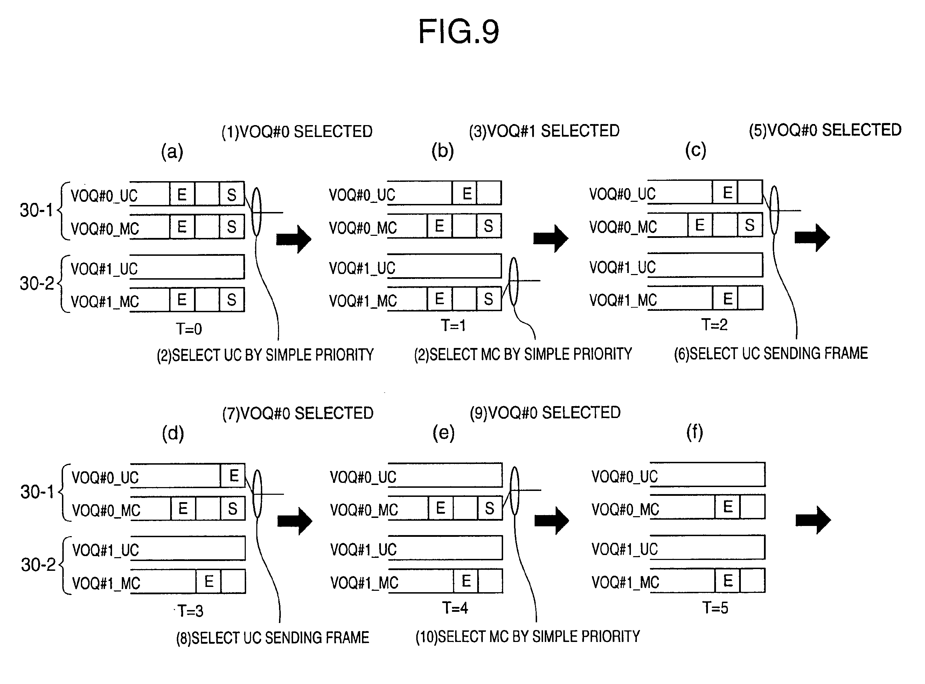

A more detailed description will now be given of the read judging process in units of frames, by referring to FIG. 9. FIG. 9 is a diagram for explaining the read judging process in the units of the frames. FIG. 9(a) shows a state where packets amounting to one frame are stored in a unicasting internal queue VOQ#0_UC and a multicasting internal queue VOQ#0_MC included in the output queue 30-1. In this state, packet amounting to one frame are stored in a multicasting internal queue VOQ#1_MC of the output queue 30-2.

The read controller 24 reads the unicasting frame or the multicasting frame from the output queue which is specified by a scheduler for avoiding collisions among all of the input lines. In this particular case, it is assumed for the sake of convenience that the output queue is determined by use of a simple priority control. As a precondition, it is assumed that the unicasting frame has the higher priority order of the simple priority control.

In FIG. 9(a), the scheduler selects the output queue 30-1, and the read controller 24 selects the unicasting internal queue VOQ#0_UC of the output queue 30-1 by the simple priority control, so as to read the write addresses of the unicasting packets. In FIG. 9(b), the scheduler selects the output queue 30-2, and the read controller 24 selects the multicasting internal queue VOQ#1_MC of the output queue 30-1 by the simple priority control, so as to read the write addresses of the multicasting packets. There is no interleaving of the unicasting frame and the multicasting frame between the output queues 30-1 and 30-2, because the output paths of the unicasting packets and the multicasting packets are mutually different.

In FIG. 9(c), the scheduler selects the output queue 30-1, and the read controller 24 again selects the unicasting internal queue VOQ#0_UC of the output queue 30-1, so as to read the write addresses of the unicasting packets. The read controller 24 continues to select the unicasting internal queue VOQ#0_UC until the write address (E) of the last unicasting packet is output from the unicasting internal queue VOQ#0_UC of the output queue 30-1 which is once selected.

In FIG. 9(d), the read controller 24 again selects the unicasting internal queue VOQ#0_UC of the output queue 30-1, so as to read the write addresses of the unicasting packets. In this state, the write address (E) of the last unicasting packet is read from the unicasting internal queue VOQ#0_UC of the output queue 30-1. Accordingly, when the scheduler selects the output queue 30-1 in FIG. 9(e), the read controller 24 selects the multicasting internal queue VOQ#0_MC of the output queue 30-1 by the simple priority control, and reads the write addresses of the multicasting packets, as may be seen from FIG. 9(e).

In this embodiment, the simple priority control is used to select the unicasting internal queue VOQ#0_UC or the multicasting internal queue VOQ#0_MC, but the selection may be made according to a round-robin format. Therefore, this embodiment can prevent the interleaving of the unicasting and multicasting frames, by providing the unicasting internal queue and the multicasting internal queue in the output queue, and selecting the unicasting internal queue and the multicasting internal queue in units of frames.

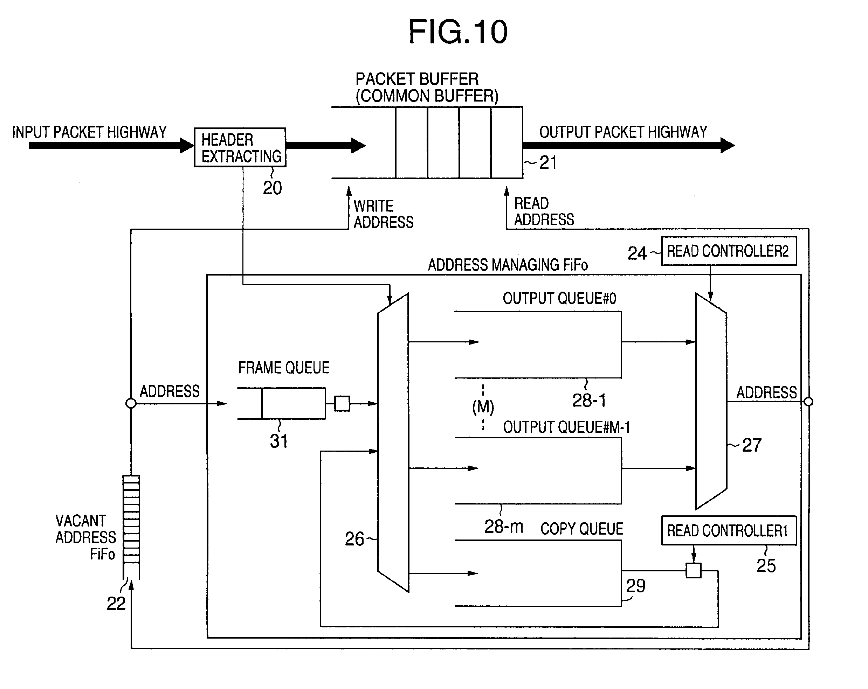

FIG. 10 is a diagram showing a structure of a third embodiment of the buffer unit according to the present invention. In FIG. 10, those parts which are the same as those corresponding parts in FIG. 2 are designated by the same reference numerals, and a description thereof will be omitted.

The buffer unit shown in FIG. 10 differs from the buffer unit shown in FIG. 2 in that a frame queue 31 is provided at a state preceding the selector 26 in the buffer unit shown in FIG. 7. As a result, the write addresses of the arriving packets are assembled in units of one frame by the frame queue 31 before being stored in one of the output queues 28-1 through 28-m corresponding to the destination information.

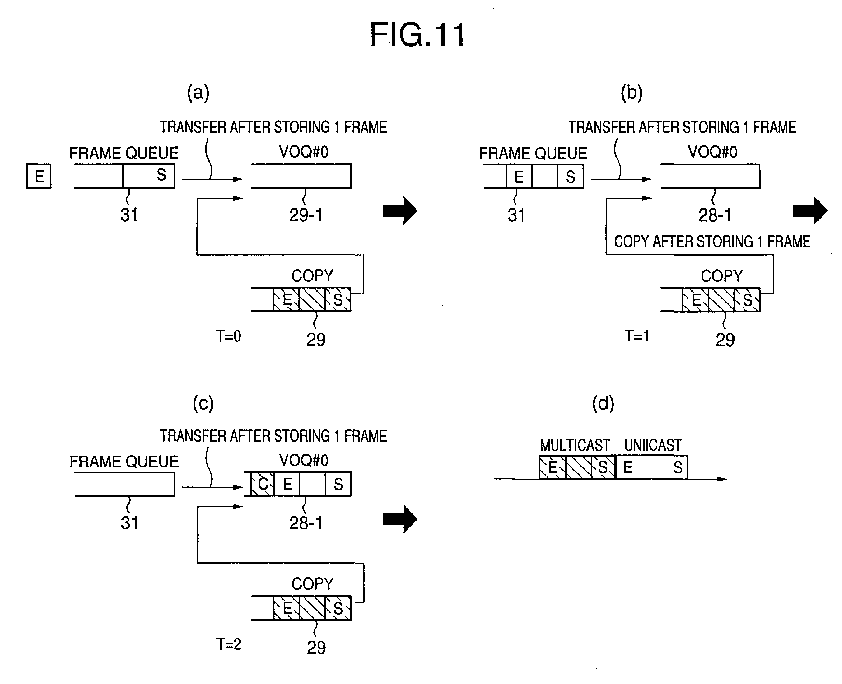

A description will be given of the basic operation of the frame queue 31, by referring to FIG. 11. FIG. 11 is a diagram for explaining a multicasting packet duplicating process of this third embodiment of the buffer unit.

FIG. 11(a) shows a state where the write addresses of the two unicasting packets which have already arrived are stored in the frame queue 31, and the write address (E) of the remaining last unicasting packet has not yet arrived. In this state, it is assumed for the sake of convenience that the write addresses of the multicasting packets amounting to one frame are already stored in the copy queue 29, and the duplicating process is carried out with respect to one of the output queues 28-2 through 28-m other than the output queue 28-1.

FIG. 11(b) shows a state where the duplicating destination of the copy queue 29 is the output queue 28-1 when the write address (E) of the last multicasting packet have arrived at the frame queue 31. When the write address (E) of the last unicasting packet arrives, the frame queue 31 transfers stored the write addresses of the unicasting packets amounting to one frame to the output queue 29-1, and the copy queue 29 transfers the provisional address to the output queue 28-1, as shown in FIG. 11(c).

In other words, address transfers are generated with respect to the same output queue 28-1 from the frame queue 31 and the copy queue 29, within one unit time. In this case, if it is possible to transfer the addresses amounting to one frame in one unit time, it is possible to avoid the frame interleaving of the address transfer from the frame queue 31 with respect to the output queue 28-1, as may be seen from FIG. 11(d). In FIG. 11, it is assumed that the transfer process from the frame queue 31 has the priority, but it is of course possible to give the priority to the transfer process from the copy queue 29.

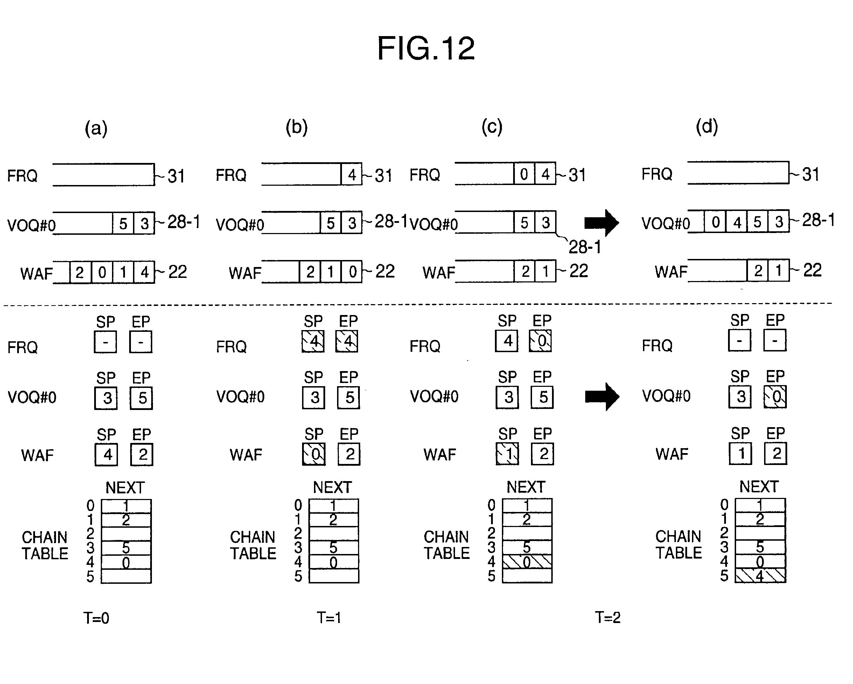

FIG. 12 is a diagram for explaining the transfer process from the frame queue 31. In FIG. 12, the frame queue (FRQ) 31 is shared by the output queues 28-1 through 28-m and the copy queue 29. This frame queue 31 includes a start pointer (SP) which indicates a starting write address, and an end pointer (EP) which indicates an ending write address.

In FIG. 12(a) through FIG. 12(d), a portion above a dotted line shows a logical image of the output queue 28-1, the frame queue 31 and the vacant address buffer section 22. In addition, in FIG. 12(a) through FIG. 12(d), a portion under the dotted line shows operations of the chain table CT and the pointers SP and EP.

For example, when the first packet arrives in a state shown in FIG. 12(a), the vacant address "4" is obtained from the vacant address buffer section 22 as the write address, as shown in FIG. 12(b). In addition, the write address "4" is stored at the start pointer SP and the end pointer EP of the frame queue 31. The vacant address "0" next to the vacant address "4" is obtained from the chain table CT, as the starting vacant address which is to be newly stored at the start pointer SP of the vacant address buffer section 22. The vacant address "0" is stored in the frame queue 31 as the new starting vacant address at the start pointer SP of the vacant address buffer section 22.

When the second packet arrives as shown in FIG. 12(c), the vacant address "0" is obtained from the vacant address buffer section 22 as the write address. The write address "0" is stored at the end pointer EP of the frame queue 31. The vacant address "1" next to the vacant address "0" is obtained from the chain table CT, as the starting vacant address which is to be newly stored at the start pointer SP of the vacant address buffer section 22. The vacant address "1" is stored in the frame queue 31 as the new starting vacant address at the start pointer SP of the vacant address buffer section 22.

When the last packet arrives as shown in FIG. 12(d), a process similar to that described above with reference to FIG. 12(c) is carried out. As a result, the write addresses amounting to one frame and stored in the frame queue 31 are transferred to one of the output queues 28-1 through 28-m and the copy queue 29.

First, a reference is made to the end pointer EP "5" of each of the output queues 28-1 through 28-m and the copy queue 29 at the transfer destination, and the write address "4" is stored as the write address next to the write address "5" in the chain table CT. The transfer process is carried out by storing the write address "0", which is stored at the end pointer EP of the frame queue 31, to the end pointer EP of the output queue 28-1.

Since the transfer process in units of one frame is realized by rearranging the write addresses, it is possible to avoid the frame interleaving even in a case where the transfer process of the frame queue 31 and the duplicating process from the copying queue 29 are generated at the same time.

Therefore, an intermediate state of the frame (copy prohibit state) shown in FIG. 6 will not occur, and it is not only possible to constantly carry out the transfer process of the frame queue 31, but also carry out the duplicating process from the copy queue 29 to one of the output queues 28-1 through 28-m at the transfer destination. Furthermore, the read controller 24 does not need to carry out a switching process in units of frames, thereby making it possible to easily avoid the frame interleaving.

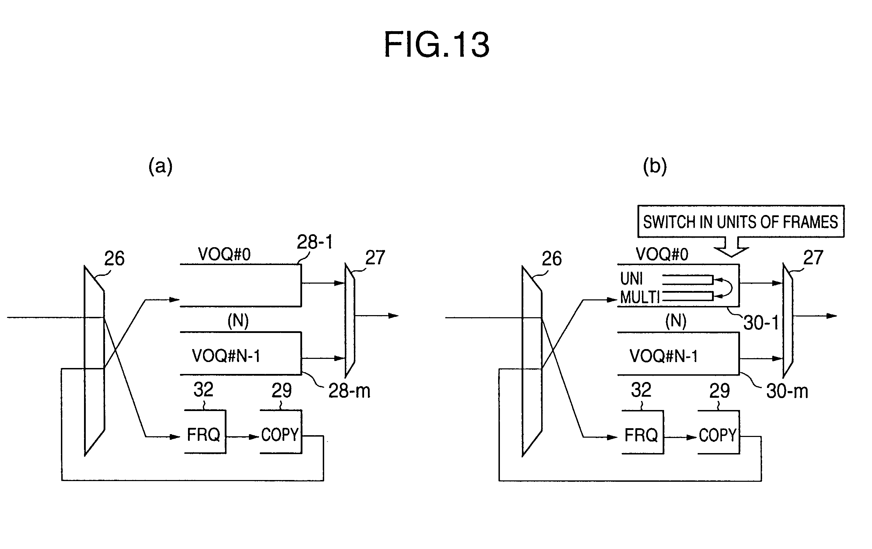

FIG. 13 is a diagram showing a structure of a fourth embodiment of the buffer unit according to the present invention. In FIG. 13, those parts which are the same as those corresponding parts in FIG. 2 are designated by the same reference numerals, and a description thereof will be omitted. In the first and second embodiments of the buffer unit described above, the copy queue 29 stores the write addresses of the multicasting packets one packet at a time, and the duplicating process is carried out after the write addresses of the multicasting packets amounting to one frame are stored in the copy queue 29. But in this fourth embodiment of the buffer unit, a frame queue 32 is provided at a stage preceding the copy queue 29.

FIG. 13(a) shows a case where the frame queue 32 is provided at the stage preceding the copy queue 29 in the first embodiment of the buffer unit. On the other hand, FIG. 13(b) shows a case where the frame queue 32 is provided at the stage preceding the copy queue 29 in the second embodiment of the buffer unit.

The frame queue 32 successively stores the write addresses of the arriving multicasting packets, and after the write addresses of the multicasting packets amounting to one frame arrives, transfers the write addresses of the multicasting packets which have been assembled in units of one frame to the copy queue 29. The transfer process of the frame queue 32 to the copy queue 29 is the same as that of the third embodiment described above, and a description thereof will be omitted.

In this fourth embodiment, it is unnecessary to monitor the state of the copy queue 29 to determine whether or not the write addresses of the multicasting packets amounting to one frame have arrived at the copy queue 29. For this reason, it is possible to carry out a simple read judging process.

Next, a description will be given of a cancel control process of the frame queue. The frame queues 31 and 32 of the third and fourth embodiments of the buffer unit described above may be constructed so that, when the write address of one of the packets which are being assembled into the frame is destroyed due to a buffer leak, threshold control or the like, the frame including these packets is cancelled as a whole.

For example, when the destruction of the write address of the packet is detected, the write address of the packet stored in the frame queue 31 or 32 is changed to a vacant address, and a cancel flag is set to indicate cancellation of the write addresses of the following packets which form the same frame as the packet with the destroyed write address. When this cancel flag is set, the write address of the arriving packet is cancelled. The cancel flag is reset or cancelled when the last packet arrives or, when the first packet of the next frame arrives.

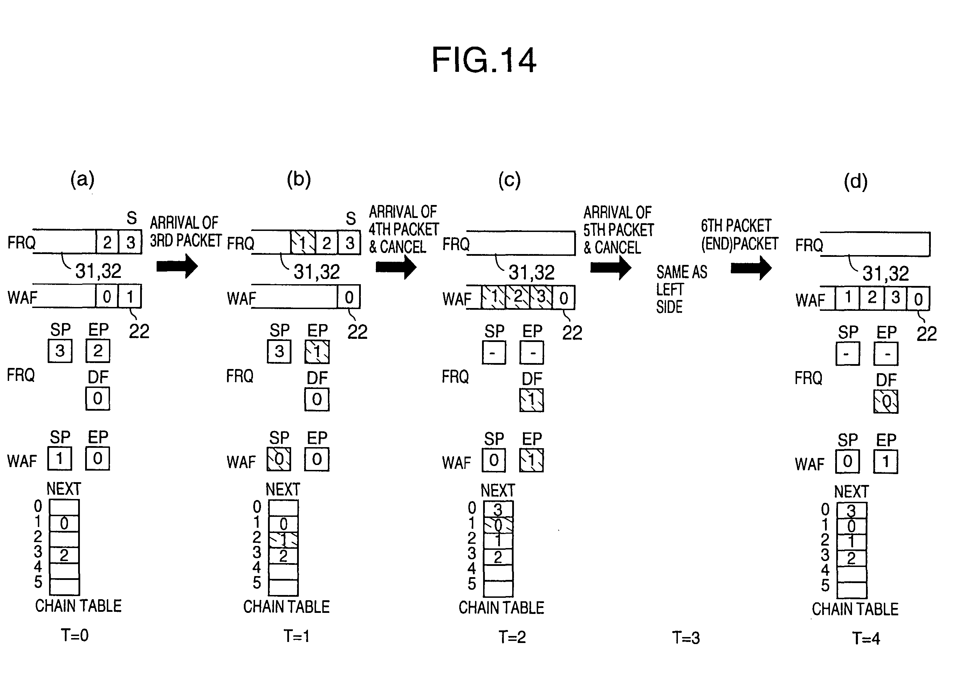

The cancel control process of the frame queue 31 or 32, will now be described with reference to FIG. 14. FIG. 14 is a diagram for explaining the cancel control process of the frame queue 31 or 32. In FIG. 14, it is assumed for the sake of convenience that the frame arriving at the buffer unit is formed by six packets.

FIG. 14(a) shows a state where the two write addresses "3" and "2" are stored in the frame queue 31 or 32. In FIG. 14(b), a process similar to that of the third or fourth embodiment is carried out when the third packet arrives. Then, it is assumed that the buffer leak occurs when the fourth packet arrives, and that the arrived packet is cancelled in FIG. 14(c).

In this case, in order to cancel the write addresses of the three packets already stored in the frame queue 31 or 32, a reference is made to the write address "0" stored at the end pointer EP of the vacant address buffer section 22 and the write address "3" stored at the start pointer SP of the frame queue 31 or 32, so as to store the write address "3" in the chain table CT as the write address next to the write address "0". Then, the transfer process is carried out by storing the write address "1" which is stored at the end pointer EP of the frame queue 31 or 32 to the end pointer EP of the vacant address buffer section 22.

Furthermore, by setting a cancel flag (DF) of the frame queue 31 or 32 to "1", the following packets of the same frame are cancelled. For example, when the fifth packet arrives, this packet is cancelled unconditionally since the cancel flag DF is set to "1". In addition, when the sixth packet arrives, this packet is also cancelled unconditionally since the cancel flag DF is set to "1".

But because the sixth packet is the last packet of the frame, the cancel flag DF of the frame queue 31 or 32 is reset to "0" in FIG. 14(d). If the last packet does not arrive due to some reason, the cancel flag DF is reset to "0" when the first packet of the next frame arrives.

Therefore, when one of the packets which are being assembled to form the frame is destroyed due to the buffer leak, threshold control or the like, the frame queue 31 or 32 can cancel the entire frame which is formed by these packets including the packet with the destroyed write address.

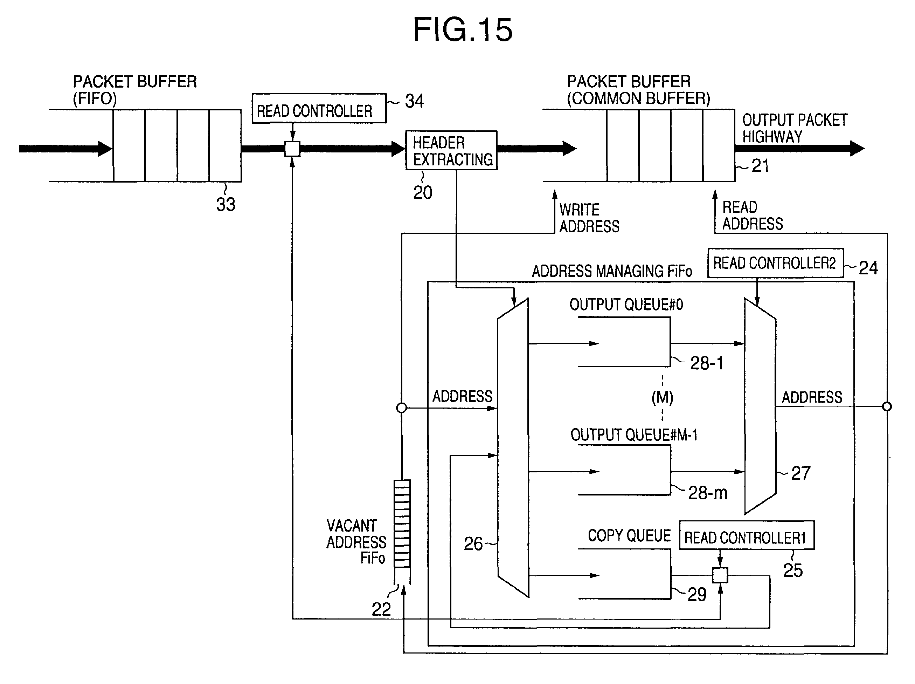

In the third embodiment of the buffer described above, the same packet buffer section 21 is shared by the frame queue 31 and the output queues 28-1 through 28-m, but it is of course possible to provide physically independent buffer sections. FIG. 15 is a diagram showing a structure of a fifth embodiment of the buffer unit according to the present invention. In FIG. 15, those parts which are the same as those corresponding parts in FIG. 10 are designated by the same reference numerals, and a description thereof will be omitted.

In FIG. 15, a packet buffer section 33, which is physically independent of the packet buffer section 21, is provided to form the frame queue 31 of the third embodiment. In this case, the write addresses of the packets amounting to one frame cannot be transferred from the packet buffer section 33 to the output queues 28-1 through 28-m within one unit time.

Accordingly, information is exchanged between the read controller 34 on the frame queue side and the read controller 25 on the copy queue 29 side, so that the read from the packet buffer section 33 is disabled while the address duplicating process is being carried out from the copy queue 29, and the address duplicating process from the copy queue 29 is disabled while the packet read process is carried out from the packet buffer section 33. By taking these measures, it is possible to use physically independent buffer sections for the frame queue (packet buffer section 33) and the output queues 28-1 through 28-m.

Next, a description will be given of a queue length managing process of the output queues 28-1 through 28-m. A first queue length counter for managing a number of write addresses stored in each of the output queues 28-1 through 28-m, and a second queue length counter for managing a virtual queue length equal to a sum of a number of addresses of the unicasting packets and a number of virtual addresses (one with respect to one frame), with respect to the output queues 28-1 through 28-m.

For example, suppose that all frames are formed by ten packets, fifty write addresses are stored in the output queue 28-1, and ten write addresses are stored in the copy queue 29.In this case, when a provisional address duplicating process is carried out from the copy queue 29 to the output queue 28-1, the number of addresses in the output queue 28-1 becomes fifty-one. However, since virtually, one provisional address corresponds to ten write addresses, the virtual queue length becomes sixty addresses.

In a case where a cancel threshold value of the output queue 28-1 is set to sixty-five, when the next ten write addresses (amounting to one frame) arrive and the cancel judging process is carried out using the virtual queue length of sixty addresses, the cancelling of the write address is determined even though fourteen mode write addresses can be stored in the output queue 28-1. For this reason, it is desirable to use the actual queue length in order to efficiently utilize the packet buffer section 21 for the cancel judging process.

On the other hand, in a case where a contention judging threshold value for contention control is set to fifty-five, non-contention is determined if the actual queue length of fifty-one addresses is used for the contention judging process. But since a time of sixty packets is required until the last packet is output from the output queue 28-1, this situation should actually be determined as a contention. Accordingly, it is desirable to use the virtual queue length for the contention judging process.

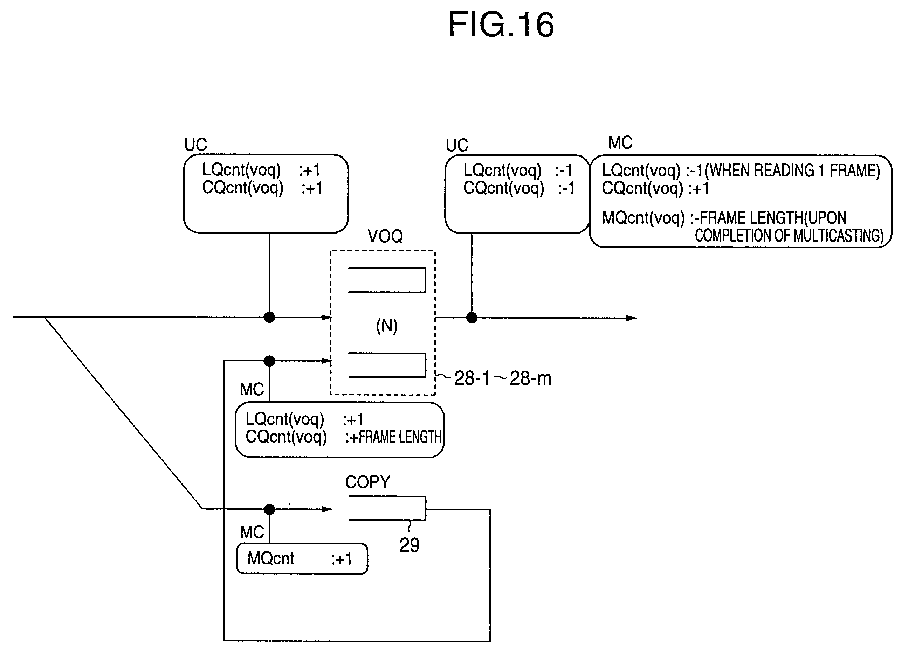

A more detailed description will be given of the queue length managing process, by referring to FIG. 16. FIG. 16 is a diagram for explaining the queue length managing process. In FIG. 16, LQcnt(voq) denotes a cancel control counter for managing the number of actual addresses of each of the output queues 28-1 through 28-m. In addition, CQcnt(voq) denotes a contention control counter for managing a virtual queue length of each of the output queues 28-1 through 28-m. Further, MQcnt denotes a cancel control counter for managing the number of actual addresses of the copy queue 29.

With respect to the unicasting packet, the counters LQcnt(voq) and CQcnt(voq) are incremented by "1" upon arrival of the unicasting packet and decremented by "1" upon output of the unicasting packet. On the other hand, with respect to the multicasting packet, the counter MQcnt is incremented by "1" upon storage of the multicasting packet in the copy queue 29. When the provisional address is issued from the copy queue 29, the counter LQcnt(voq) is incremented by "1", and a "frame length (number of packets forming the frame)" is added to the counter CQcnt(voq). The counter CQcnt(voq) is decremented by "1" every time the provisional address is output from the output queues 28-1 through 28-m.

When the reading of the multicasting packets amounting to one frame ends and the provisional address is returned to the vacant address buffer section 22 as the vacant address, the counter LQcnt(voq) is decremented by "1". The counter MQcnt with respect to the copy queue 29 is decremented by a "frame length" when all of the multicasting packets of the multicasting frame duplicated from the copy queue 29 are output from the packet buffer section 21.

Further, the present invention is not limited to these embodiments, but various variations and modifications may be made without departing from the scope of the present invention.

## Claims

1. A buffer unit for fragmenting variable-length packets into fixed-length packets for processing in units of fixed-length packets, comprising:
fixed-length packet storing means for storing the fixed-length packets for each of output paths;
multicasting processing means for storing multicasting packets having a plurality of destinations, and transferring the multicasting packets to said fixed-length packet storing means depending on the plurality of destinations; and
control means for monitoring a storage state of said fixed-length packet storing means, and carrying out a control so that the multicasting packets are transferred within a variable-length packet formed by a plurality of fixed-length packets.

2. A buffer unit for fragmenting variable-length packets into fixed-length packets for processing in units of fixed-length packets, comprising:
fixed-length packet storing means, including first and second packet storing sections, for storing the fixed-length packets for each of output paths;
multicasting processing means for storing multicasting packets having a plurality of destinations, and transferring the multicasting packets to said second packet storing section depending on the plurality of destinations; and
control means for monitoring a storage state of one of said first and second packet storing sections, and carrying out a control so that reading from said first and second packet storing sections is switched in units of a variable-length packet which is formed by a plurality of fixed-length packets.

3. A buffer unit for fragmenting variable-length packets into fixed-length packets for processing in units of fixed-length packets, comprising:
temporary storing means for storing the fixed-length packets and outputting a plurality of fixed-length packets forming a single variable-length packet after the plurality of fixed-length packets are received;
fixed-length packet storing means for storing the plurality of fixed-length packets output from said temporary storing means for each of output paths; and
multicasting processing means for storing multicasting packets having a plurality of destinations, and transferring the multicasting packets to said fixed-length packet storing means depending on the plurality of destinations.

4. The buffer unit as claimed in any of claims 1 to 3, further comprising:
multicasting packet storing means for storing the multicasting packets having the plurality of destinations, and transferring the plurality of multicasting packets to said multicasting processing means after a plurality of multicasting packets forming a single variable-length packet are received.

5. The buffer unit as claimed in claim 3 or 4, wherein one of said temporary storing means and said multicasting packet storing means cancels the single variable-length packet when a defect is detected in one of the fixed-length packets or the multicasting packets forming the single variable-length packet.

6. A buffer unit for fragmenting variable-length packets into fixed-length packets for processing in units of fixed-length packets, comprising:
packet storing means for storing the fixed length packets;
fixed-length packet storing means for storing stored addresses of the fixed-length packets for each of output paths;
multicasting processing means for storing stored addresses of multicasting packets having a plurality of destinations, and transferring virtual addresses corresponding to the stored addresses of the multicasting packets to said fixed-length packet storing means depending on the plurality of destinations; and
queue length managing means for managing a first sum total of a number of addresses and a number of virtual addresses stored in said fixed-length packet storing means for each of the output paths, and a second sum total of the number of addresses and a number of the addresses of the multicasting packets,
said first sum total being used for packet cancel control, said second sum total being used for packet contention control.

7. A buffer unit for fragmenting variable-length packets into fixed-length packets for processing in units of fixed-length packets, comprising:
first storing means for storing the fixed-length packets, and outputting a plurality of fixed-length packets forming a single variable-length packet when the plurality of fixed-length packets are received;
second storing means for storing the plurality of fixed-length packets output from said first storing means for each of output paths; and
multicasting processing means for storing multicasting packets having a plurality of destinations, and transferring the multicasting packets to said second storing section depending on the plurality of destinations,
outputs of said first storing means and said multicasting processing means being switched in units of a variable-length packet which is formed by a plurality of fixed-length packets.

8. A switching apparatus for fragmenting variable-length packets into fixed-length packets for processing in units of fixed-length packets, comprising:
an input buffer section receiving multicasting packets having a plurality of destinations or unicasting packets having a single destination;
a switching section switching the multicasting packets or the unicasting packets received from said input buffer section depending on the destination of each packet; and
an output buffer section receiving fixed-length packets from said switching section depending on output paths, and defragmenting the fixed-length packets into the variable-length packets,
said input buffer section outputting a plurality of fixed-length packets in units of a variable-length packet which is formed by a plurality of fixed-length packets.

9. The switching apparatus as claimed in claim 8, wherein said input buffer section comprises:
fixed-length packet storing means for storing the fixed-length packets for each of output paths;
multicasting processing means for storing multicasting packets having a plurality of destinations, and transferring the multicasting packets to said fixed-length packet storing means depending on the plurality of destinations; and
control means for monitoring a storage state of said fixed-length packet storing means, and carrying out a control so that the multicasting packets are transferred within a variable-length packet formed by a plurality of fixed-length packets.
